# FASCICULE DE BREVET EUROPEEN

(11) **EP 4 385 105 B1**
(45) Date de publication et mention de la délivrance du brevet: **04.06.2025**
(21) Numéro de dépôt: 22765047.0
(22) Date de dépôt: 11.08.2022
(51) Int. Cl.: H02B 3/00, H02B 1/36

(54) **PROCÉDÉS ET SYSTÈMES POUR CONFIGURER AUTOMATIQUEMENT DES APPAREILS ÉLECTRIQUES DANS UN TABLEAU ÉLECTRIQUE**
VERFAHREN UND SYSTEME ZUR AUTOMATISCHEN KONFIGURATION VON ELEKTRISCHEN GERÄTE IN EINEM ELEKTRISCHEN SCHALTSCHRANK
MÉTHODS AND SYSTEMS FOR AUTOMATIC CONFIGURATION OF ELECTRICAL DEVICES IN AN ELECTRICAL SWITCHBOARD

(30) Priorité: 12.08.2021 FR 2108666
(43) Date de publication de la demande: 19.06.2024
(73) Titulaire: Schneider Electric Industries SAS, 92500 Rueil-Malmaison (FR)
(72) Inventeur: DE VOS, Gilles, 38320 Brie et Angonnes (FR); FREEMAN, Alan, Raleigh, North Carolina 27601 (US)
(74) Mandataire: Lavoix
(86) Numéro de dépôt international: PCT/EP2022/072507
(87) Numéro de publication internationale: WO 2023/017108

(56) Documents cités:
- EP-A1- 2 464 204
- WO-A1-2017/191059
- WO-A1-2020/025399
- DE-A1- 102010 032 033

## Description

L'invention concerne des procédés et des systèmes pour configurer automatiquement des appareils électriques dans un tableau électrique.

Dans le domaine de la distribution d'électricité, il existe des tableaux électriques comportant une ou plusieurs armoires électriques comportant chacune des tiroirs amovibles dans lesquels peuvent être installés un ou plusieurs appareils électriques.

Les appareils électriques, qui peuvent être des appareils de protection électrique, ou des appareils de commutation, ou des appareils de mesure, ou des variateurs de vitesse, ou tout appareil équivalent, peuvent communiquer avec un appareil de contrôle, tel qu'un ordinateur industriel, qui supervise le fonctionnement du tableau électrique.

Chaque armoire intègre un équipement réseau, tel qu'un routeur, qui permet de mettre en communication les appareils de chaque tiroir avec l'appareil de contrôle.

Un problème se pose lorsqu'un utilisateur souhaite configurer tous les appareils, par exemple lors de la mise en service du tableau électrique suite à l'installation du tableau électrique ou suite à une opération de maintenance.

Typiquement, pour ce faire, un utilisateur doit configurer manuellement chacun des appareils électriques, pour identifier l'appareil, pour confirmer que l'appareil est installé au bon endroit, puis pour paramétrer l'appareil avec des paramètres de fonctionnement. Ces opérations peuvent s'avérer très longues et laborieuses lorsque l'utilisateur doit intervenir sur des installations qui comportent un grand nombre d'appareils, par exemple plusieurs dizaines d'appareils voire plusieurs centaines d'appareils.

Il existe également, au moins en partie parce que la configuration est faite manuellement, un risque d'erreur qui peut conduire à une mauvaise identification d'un appareil ou à un mauvais réglage d'un appareil, ce qui peut avoir des conséquences adverses sur le bon fonctionnement du tableau électrique, voire même causer un problème de sécurité.

WO 2017/191059 A1 divulgue un système et un procédé pou reconfigurer une armoire électrique à l'aide d'une unité d'identification optique identifiant les unités fonctionnelles présentes dans l'armoire électrique. DE 10 2010 032033 A1 divulgue un système et un procédé de configuration automatique d'appareils électriques débrochables dans un tableau électrique. L'appareil débrochable comporte un appareil de contrôle paramétrable. Le tableau comporte pour chaque logement pour appareil débrochable une mémoire contenant les paramètres de configuration de l'appareil électrique associé. Lors de l'insertion d'un nouvel appareil électrique, les données de la mémoire sont automatiquement transférées à l'appareil de contrôle associé.

L'invention est également applicable dans d'autres domaines techniques, par exemple pour des tableaux électriques accueillant des équipements de communication dans un centre de données.

C'est à ces inconvénients qu'entend plus particulièrement remédier l'invention en proposant des procédés et des systèmes pour configurer automatiquement des appareils électriques dans un tableau électrique.

A cet effet, un aspect de l'invention concerne un procédé pour configurer des appareils électriques dans un tableau électrique, ce procédé comportant des étapes consistant à :
- acquérir des données de configuration lisibles par machine comportant une liste d'appareils électriques à installer, la liste comportant, pour chaque appareil électrique à installer, des données d'identification de l'appareil électrique et au moins un paramètre de réglage à appliquer ;
- par chaque appareil électrique présent dans le tableau électrique, afficher un identifiant visuel sur un écran d'affichage électronique associé à l'appareil électrique, l'identifiant visuel affiché comportant des informations d'identification dudit appareil ;
- par un terminal utilisateur comportant un capteur optique, acquérir une image montrant les appareils électriques présents dans le tableau électrique, ladite image acquise comportant les identifiants visuels affichés par chacun desdits appareils électriques ;
- par un processeur :
   comparer automatiquement les informations d'identification de chaque appareil électrique de ladite liste avec les informations d'identification des identifiants visuels de l'image acquise ;
   pour chaque appareil électrique de la liste dont les informations d'identification correspondent aux informations d'identification d'un des identifiants visuels de l'image acquise, envoyer ledit au moins un paramètre de réglage à appliquer audit appareil électrique ;
   pour chaque appareil électrique de la liste dont les informations d'identification ne correspondent pas aux informations d'identification d'un des identifiants visuels de l'image acquise, identifier une condition d'anomalie.

Selon des aspects avantageux mais non obligatoires, un tel procédé peut incorporer une ou plusieurs des caractéristiques suivantes, prises isolément ou suivant toute combinaison techniquement admissible :
- -une étape de vérification manuelle est mise en oeuvre lorsque une condition d'anomalie est identifiée pour au moins un appareil électrique.
- l'étape de vérification manuelle comporte, pour ledit appareil électrique :
   ∘ envoyer à un utilisateur une requête demandant d'actionner manuellement un élément d'interface d'une interface utilisateur associée audit appareil électrique ;
   ∘ acquérir une information provenant d'un appareil du tableau indiquant qu'un utilisateur a interagi avec ledit élément d'interface,
   o si l'appareil ayant envoyé ladite information correspond à l'appareil pour lequel la condition d'anomalie a été soulevée, lever la condition d'anomalie et considérer ledit appareil électrique comme ayant été identifié avec succès.
- après avoir identifié une condition d'anomalie pour un appareil électrique, le procédé affiche un message d'anomalie sur une interface utilisateur associée audit appareil électrique.
- le message d'anomalie est affiché en activant un témoin lumineux sur l'interface utilisateur associée audit appareil électrique.
- l'identifiant visuel est un code à deux dimensions lisible optiquement, tel qu'un code « Data Matrix », ou un QR-code, ou un code à barres, ou tout code équivalent.
- le terminal utilisateur est un appareil de communication mobile, tel qu'un téléphone mobile, ou une tablette numérique, ou un assistant personnel portable, ou un ordinateur portable, ou tout dispositif électronique - pour chaque appareil électrique de la liste dont les informations d'identification correspondent aux informations d'identification d'un des identifiants visuels de l'image acquise, ledit au moins un paramètre de réglage envoyé est appliqué par un contrôleur électronique associé audit appareil électrique.
- chaque appareil électrique est associé à un indicateur lumineux, ledit indicateur lumineux restant allumé tant que l'appareil électrique n'a pas été configuré avec succès.

Selon un autre aspect, l'invention concerne un système pour configurer des appareils électriques dans un tableau électrique, ce système comportant un tableau électrique, un terminal utilisateur et des appareils électriques installés dans le tableau électrique, le système étant configuré pour mettre en oeuvre des étapes consistant à :
- acquérir des données de configuration lisibles par machine comportant une liste d'appareils électriques à installer, la liste comportant, pour chaque appareil électrique à installer, des données d'identification de l'appareil électrique et au moins un paramètre de réglage à appliquer ;
- par chaque appareil électrique présent dans le tableau électrique, afficher un identifiant visuel sur un écran d'affichage électronique associé à l'appareil électrique, l'identifiant visuel affiché comportant des informations d'identification dudit appareil ;
- par le terminal utilisateur comportant un capteur optique, acquérir une image montrant les appareils électriques présents dans le tableau électrique, ladite image acquise comportant les identifiants visuels affichés par chacun desdits appareils électriques ;

- par un processeur :
   comparer automatiquement les informations d'identification de chaque appareil électrique de ladite liste avec les informations d'identification des identifiants visuels de l'image acquise,
   pour chaque appareil électrique de la liste dont les informations d'identification correspondent aux informations d'identification d'un des identifiants visuels de l'image acquise, envoyer ledit au moins un paramètre de réglage à appliquer audit appareil électrique ;
   pour chaque appareil électrique de la liste dont les informations d'identification ne correspondent pas aux informations d'identification d'un des identifiants visuels de l'image acquise, identifier une condition d'anomalie.

L'invention sera mieux comprise et d'autres avantages de celle-ci apparaîtront plus clairement à la lumière de la description qui va suivre d'un mode de réalisation d'un procédé de configuration automatique d'un appareil électrique dans un tableau électrique donnée uniquement à titre d'exemple et faite en référence aux dessins annexés, dans lesquels :
[Fig 1] la figure 1 représente schématiquement un exemple d'un tableau électrique comportant des appareils électriques et un système permettant d'inscrire les appareils électriques auprès d'un appareil de contrôle pilotant le tableau électrique ;
[Fig 2] la figure 2 représente un schéma illustrant des étapes de fonctionnement d'un procédé d'inscription d'appareils électriques du tableau électrique de la figure 1 ;
[Fig 3] la figure 3 représente un schéma illustrant des étapes de fonctionnement d'un procédé d'inscription d'appareils électriques du tableau électrique de la figure 1.

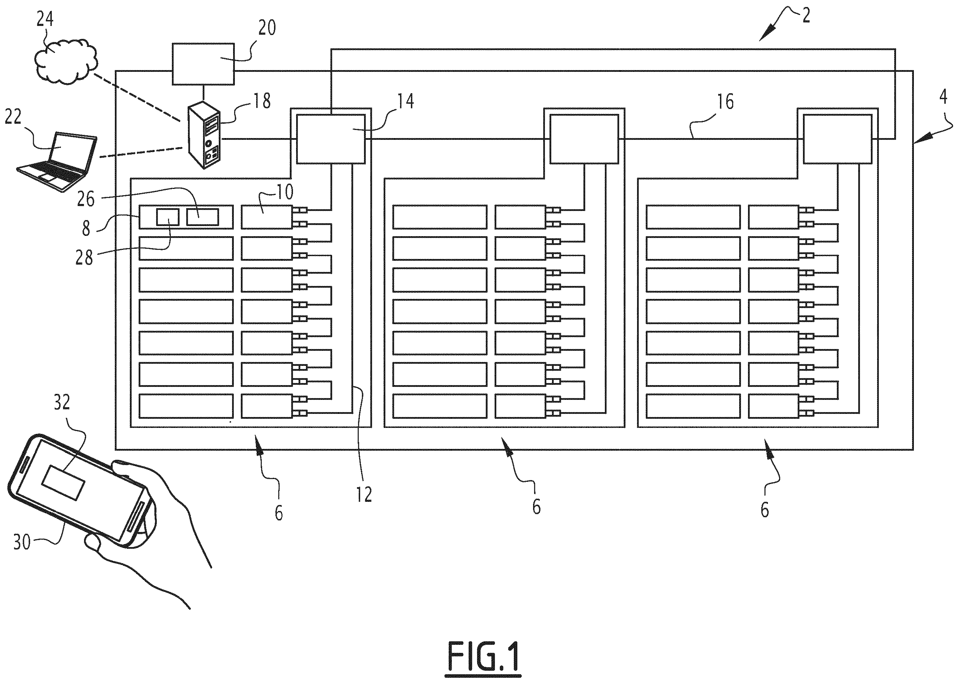

La figure 1 représente un système 2 comprenant un tableau électrique 4.

Le tableau électrique 4 comporte plusieurs armoires électriques 6.

Chaque armoire électrique 6 comporte des tiroirs amovibles 8 chacun configurés pour accueillir un ou plusieurs appareils électriques.

Par exemple, les appareils électriques peuvent être des appareils de protection électrique, ou des appareils de commutation, ou des appareils de mesure, ou des départs moteurs (« Motor Management Device », ou « driver » en anglais), ou des variateurs de vitesse, ou tout appareil équivalent.

Dans certains exemples de mise en oeuvre, le tableau électrique 4 est utilisé dans une installation de distribution d'électricité.

Dans l'exemple illustré, les armoires électriques 6 présentent des dimensions similaires et sont disposés côte à côte au sein du tableau électrique 4.

Par exemple, le tableau électrique 4 comporte une armature dans laquelle sont délimitées plusieurs compartiments qui forment chacun une des armoires électriques 6.

Dans le mode de réalisation illustré, les tiroirs amovibles 8 (aussi nommés tiroirs débrochables) sont, au sein de chaque armoire électrique 6, disposés en colonne, par exemple verticalement les uns au-dessus des autres.

Ainsi, les tiroirs amovibles 8 sont répartis entre plusieurs armoires électriques 6 pour former plusieurs colonnes au sein du tableau électrique 4.

En pratique, chaque armoire électrique 6 peut comporter plusieurs dizaines de tiroirs amovibles 8, par exemple trente tiroirs amovibles, le nombre de tiroirs visibles sur la figure 1 étant réduit dans un souci de clarté et n'étant pas limitatif.

Les tiroirs amovibles 8 sont configurés pour être réversiblement insérés dans des logements correspondants ménagés dans les armoires électriques 6 et/ou pour être retirés de ces logements.

Cela permet de connecter et de déconnecter rapidement les appareils, parfois à chaud lors du fonctionnement du tableau électrique 4.

Chaque armoire électrique 6 comporte également des connecteurs 10 capables de coopérer chacun avec un tiroir amovible 8 lorsque ledit tiroir amovible 8 est inséré dans un logement de l'armoire électrique 6.

Par exemple, les connecteurs 10 sont des connecteurs d'échange de données. Les connecteurs 10 sont montés fixement dans l'armoire électrique 6, de préférence latéralement dans les logements de l'armoire électrique 6, et sont configurés pour être raccordés à des connecteurs correspondants montés sur les tiroirs 8, de préférence montés latéralement, sur au moins un côté latéral dudit tiroir 8.

Des connecteurs électrique de puissance, aussi nommées pinces de puissance, peuvent être disposées en fond des logement pour assurer une connexion avec le fond des tiroirs 8.

Cela permet d'assurer une connexion électrique entre, d'une part l'appareil électrique contenu dans chaque tiroir amovible 8 avec, d'autre part, un ou plusieurs équipements contenus dans le tableau électrique, tels qu'une source d'alimentation électrique ou un réseau de communication.

Chaque armoire électrique 6 comporte également des liaisons de communication 12 et un équipement réseau 14, tel qu'un routeur.

Les liaisons de communication 12 raccordent les connecteurs 10 (et les appareils électriques contenus dans les tiroirs électriques correspondants) à l'équipement réseau 14.

Par exemple, les liaisons de communication 12 comportent des câbles, tels que des câbles Ethernet.

Dans cet exemple, seule une armoire électrique 6 a été décrite en détail dans un souci de simplicité, mais on comprend que, de préférence, les armoires électriques 6 du tableau électrique 4 sont similaires voire identiques dans leur conception et qu'elles comportent des éléments similaires ou identiques.

Le tableau électrique 4 comporte également un réseau informatique 16 qui met en communication les équipements réseau 14 de chacune des armoires électriques 6.

Par exemple, le réseau informatique 16 est un réseau filaire, tel qu'un réseau de type Ethernet.

Le tableau électrique 4 comporte également un appareil de contrôle 18.

Par exemple, l'appareil de contrôle 18 est un ordinateur industriel (ou PC industriel, de l'anglais « Personal Computer »).

En variante, l'appareil de contrôle 18 peut être un contrôleur logique programmable, ou tout appareil équivalent.

L'appareil de contrôle 18 est connecté au réseau informatique 16, par exemple par l'intermédiaire de l'un des équipements réseau 14.

L'appareil de contrôle 18 comporte un processeur (tel qu'un microprocesseur) et une mémoire informatique ou tout support approprié d'enregistrement de données lisible par ordinateur.

La mémoire ou le support d'enregistrement comporte des instructions exécutables et/ou un code logiciel prévu pour, entre autres, superviser le fonctionnement de l'armoire électrique 4 et mettre en oeuvre un procédé d'inscription de appareils électriques dans le tableau électrique 4 lorsque ces instructions sont exécutées par le processeur.

Selon des variantes, l'appareil de contrôle 18 peut comporter un processeur de traitement du signal (DSP), ou un composant logique reprogrammable (FPGA), ou un circuit intégré spécialisé (ASIC), ou tout élément équivalent.

Le tableau électrique 4 comporte en outre un panneau de commande 20.

Le panneau de commande 20 comporte des éléments d'interface homme-machine permettant à un utilisateur d'interagir avec le tableau électrique 4, notamment pour communiquer des instructions ou pour voir un affichage d'un ou de plusieurs états internes du tableau électrique 4.

Par exemple, le panneau de commande 20 comporte des témoins lumineux, tels que des diodes électroluminescentes (LED) et/ou un écran d'affichage et/ou des boutons et/ou un clavier et/ou un avertisseur sonore.

Le panneau de commande 20 est ici connecté à l'appareil de contrôle 18.

L'appareil de contrôle 18 peut également être connecté à un poste de travail 22 situé à l'extérieur du tableau électrique 4.

L'appareil de contrôle 18 comporte en outre des moyens de communication lui permettant de se connecter à un réseau informatique distant 24, tel que le réseau internet, par exemple pour accéder à un service logiciel hébergé par un ou par plusieurs serveurs informatiques distants, à l'instar d'un service informatique « en nuage ».

Comme illustré sur la figure 1 en référence à un seul tiroir amovible 8, à des fins d'illustration, chaque tiroir amovible 8 comporte un contrôleur électronique 26 et une interface de commande 28.

Par exemple, le contrôleur électronique 26 comporte un processeur et une mémoire informatique.

Dans cette description, l'emploi du terme « processeur » ne fait pas obstacle à ce que, en variante, au moins une partie des fonctions assurées par un processeur soient réalisées par d'autres composants électroniques, tels qu'un processeur de traitement du signal (DSP), ou un composant logique reprogrammable (FPGA), ou un circuit intégré spécialisé (ASIC), ou tout élément équivalent, ou toute combinaison de ces éléments.

La mémoire est notamment capable de stocker des informations d'identification propres à l'appareil électrique, ainsi que des paramètres de fonctionnement (des réglages) de l'appareil électrique.

Les informations d'identification peuvent comporter, par exemple, de façon non limitative, un identifiant unique tel qu'un numéro de série, et/ou un identifiant du type de tiroir amovible et/ou une adresse réseau, telle qu'une adresse matérielle (adresse MAC) ou une adresse IP (notamment une adresse IPv6).

Par exemple, dans le cas où l'appareil électrique est un départ moteur, les informations d'identification peuvent aussi comporter :
- des informations sur la charge électrique pilotée par l'appareil électrique (par exemple, la puissance électrique admissible et/ou le nom de la charge)
- des caractéristiques sur la fonction du départ moteur (par exemple, des fonctions connues sous les termes anglais de direct on line, soft starter, reverser, drive, etc.).

Dans de nombreux modes de réalisation, le contrôleur électronique 26 est configuré pour appliquer les paramètres de réglage fournis par un utilisateur afin de réguler le fonctionnement de l'appareil électrique auquel il est associé (dans le tiroir amovible 8).

Par exemple, dans le cas où l'appareil électrique est un départ moteur, le contrôleur électronique 26 peut avantageusement servir de passerelle de communication entre le connecteur 10 et l'appareil électrique pour les mesures et pour le contrôle du moteur piloté par le départ moteur.

Dans un autre exemple, dans le cas où l'appareil électrique est un appareil de commutation, le contrôleur électronique 26 peut avantageusement gérer les meures de tensions et de courant, peut contrôler l'état (ouvert ou fermé) de l'appareil électrique, peut faire remonter des informations d'alerte sur un déclenchement de l'appareil électrique, et ainsi de suite.

L'interface de commande 28 comporte des éléments d'interface homme-machine permettant à un utilisateur d'interagir avec le tiroir amovible 8, par exemple pour communiquer des instructions ou pour voir un affichage d'un ou de plusieurs états internes d'un ou de plusieurs appareils électriques contenus dans le tiroir amovible 8.

En pratique, l'interface de commande 28 peut être limitée à un rôle d'afficher des informations (notamment l'affichage d'un ou de plusieurs états internes d'un ou de plusieurs appareils électriques) dans les cas où l'armoire électrique 6 comporte déjà des éléments d'interface homme machine.

De préférence, l'interface de commande 28 comporte au moins un écran d'affichage électronique et un témoin lumineux.

L'écran d'affichage électronique peut être un écran à cristaux liquides, ou un écran à diodes organiques (OLED), ou un écran électrophorétique (qui présente un état bistable et conserve ainsi l'information affichée en cas de coupure d'alimentation électrique), ou toute technologie d'affichage appropriée. Le témoin lumineux peut être une diode électroluminescente (LED), de préférence pouvant prendre émettre une lumière de plusieurs couleurs différentes.

En particulier, l'interface de commande 28 est configurée pour afficher un identifiant visuel comportant des informations d'identification propres à l'appareil électrique, par exemple pour afficher, sous une forme encodée, au moins une partie des informations d'identification stockées en mémoire du contrôleur électronique 26.

Par exemple, l'identifiant visuel est un code à deux dimensions lisibles optiquement, tel qu'un code « Data Matrix », ou un QR-code, ou un code à barres, ou tout code équivalent.

En variante, l'identifiant visuel pourrait être du texte en clair, par exemple une chaîne de caractères numériques ou alphanumériques. Cependant, le choix d'un code à deux dimensions lisibles optiquement permet une meilleure lisibilité et une meilleure correction d'erreur. En effet, de préférence, l'identifiant visuel peut comporter un code de correction d'erreur.

Le système 2 comporte également un terminal 30, tel qu'un terminal de communication mobile, destiné à être utilisé par un utilisateur lors d'un procédé de configuration pour configurer automatiquement les appareils électriques dans le tableau électrique 4 auprès de l'appareil de contrôle 18.

Dans certains modes de réalisation, le terminal 30 est un appareil de communication mobile, tel qu'un téléphone mobile, ou une tablette numérique, ou un assistant personnel portable, ou un ordinateur portable, ou tout dispositif électronique équivalent.

Par exemple, le terminal 30 comporte un processeur 32, une mémoire informatique et au moins un capteur optique, tel qu'une caméra optique.

Le capteur optique est apte à acquérir des images numériques.

Par exemple, le terminal 30 comprend des moyens de traitement permettant de traiter et stocker les images numériques acquises par le capteur optique.

Le terminal 30 peut aussi comporter un écran d'affichage électronique.

Le terminal 30 comporte aussi une interface de communication permettant d'établir un lien de communication, notamment avec l'appareil de contrôle 18, afin d'échanger des données avec l'appareil de contrôle 18.

Par exemple, l'interface de communication du terminal 30 peut comporter une interface de communication sans fil, notamment un émetteur-récepteur et une antenne radiofréquence, compatible avec un réseau de communications sans fil, tel qu'un réseau WiFi, et/ou avec un réseau de télécommunications mobiles, tel qu'un réseau GSM, ou LTE, ou équivalent.

L'invention permet plus particulièrement de configurer automatiquement les appareils électriques présents dans le tableau électrique 4 auprès de l'appareil de contrôle 18, en les configurant automatiquement à partir de données de configuration préparées à l'avance.

Les données de configuration préparées à l'avance peuvent comporter, pour chaque appareil, au moins un paramètre de réglage devant être appliqué à cet appareil.

Par exemple, les données de configuration sont préparées sous la forme de données de configuration lisibles par machine, par exemple dans un fichier structuré de type XML (« Extensible Markup Language »), ou JSON (« JavaScript Object Notation »), ou tout format électronique équivalent de stockage de données.

En variante, il pourrait s'agir d'une base de données.

Le procédé de configuration vise notamment à vérifier que les appareils électriques devant être installés soient bien physiquement installés dans le tableau électrique 4, et qu'ils sont bien installés à l'emplacement choisi à l'avance. Le procédé vise aussi à configurer les appareils électriques avec les paramètres de réglage choisis à l'avance.

Ce procédé de configuration peut avantageusement être mis en oeuvre après que les appareils électriques aient été installés physiquement dans le tableau électrique 4, lors de la mise en service du tableau électrique 4, ou suite à une opération de maintenance ayant conduit à une modification du tableau électrique 4, par exemple.

De façon générale, dans de nombreux modes de réalisation, le procédé de configuration comprend des étapes consistant à :
- acquérir des données de configuration lisibles par machine comportant une liste d'appareils électriques à installer, la liste comportant, pour chaque appareil électrique à installer, des données d'identification de l'appareil électrique et au moins un paramètre de réglage à appliquer ;
- par chaque appareil électrique présent dans le tableau électrique 4, afficher un identifiant visuel sur un écran d'affichage électronique associé à l'appareil électrique (ici associé à l'interface utilisateur du tiroir amovible 8 dans lequel l'appareil électrique est reçu), l'identifiant visuel affiché comportant des informations d'identification dudit appareil ;
- par le terminal utilisateur 30 comportant un capteur optique, acquérir une image montrant les appareils électriques présents dans le tableau électrique, ladite image acquise comportant les identifiants visuels affichés par chacun desdits appareils électriques ;
- par un processeur (par exemple par le processeur de l'appareil de contrôle 18) :
   - comparer automatiquement les informations d'identification de chaque appareil électrique de ladite liste avec les informations d'identification des identifiants visuels de l'image acquise,
   - pour chaque appareil électrique de la liste dont les informations d'identification correspondent aux informations d'identification d'un des identifiants visuels de l'image acquise, envoyer ledit au moins un paramètre de réglage à appliquer audit appareil électrique (le contrôleur électronique 26 associé à l'appareil,
   - pour chaque appareil électrique de la liste dont les informations d'identification ne correspondent pas aux informations d'identification d'un des identifiants visuels de l'image acquise, identifier une condition d'anomalie.

Il convient de noter qu'en variante, les étapes ici décrites pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Grâce à l'invention, il est possible de configurer rapidement un grand nombre d'appareils électriques dans le tableau électrique 4. L'identification et la détection des appareils sont réalisées automatiquement par reconnaissance optique, à partir de l'image acquise prise par l'utilisateur au moyen du terminal utilisateur 30, grâce aux identifiants visuels affichés par les appareils électriques et présents dans l'image acquise.

Cette identification est plus simple et plus fiable à mettre en œuvre qu'une identification manuelle, car cette dernière comporte un risque élevé de mal identifier un appareil.

Une fois les appareils identifiés, les paramètres prédéfinis à l'avance sont envoyés automatiquement aux appareils afin de régler ces appareils en accord avec les plans établis à l'avance par un utilisateur. Cette étape de configuration peut être faite automatiquement et donc est plus rapide et moins susceptible d'être entachée d'erreurs que si elle devait être faite manuellement, appareil par appareil, par un utilisateur.

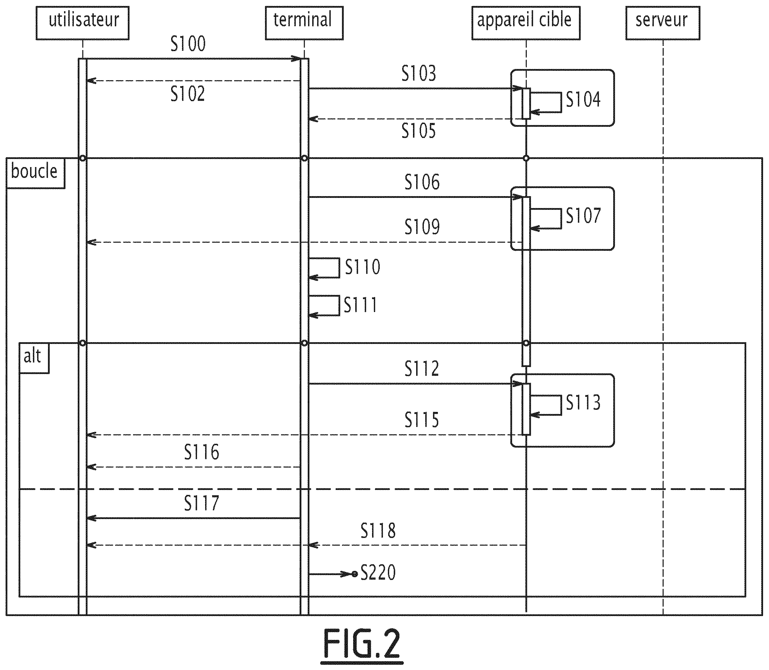

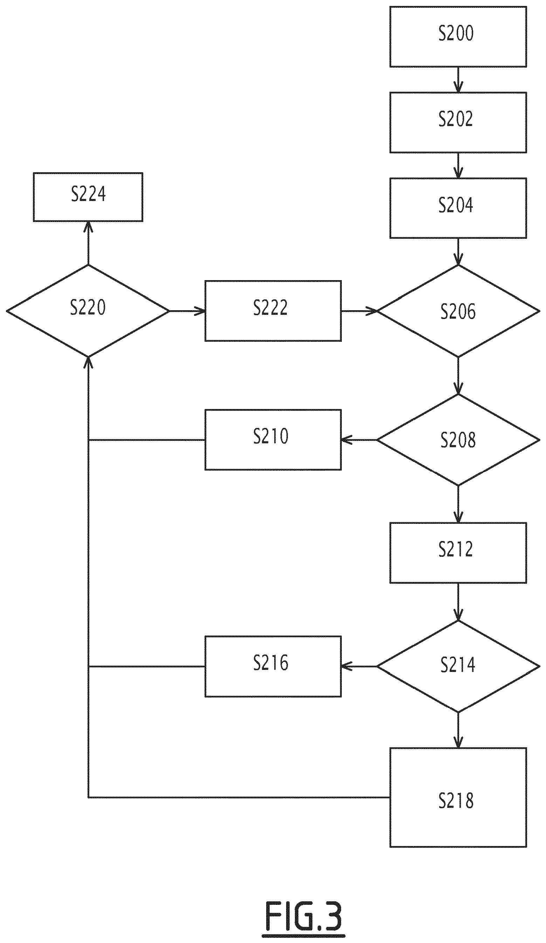

Un exemple de mise en œuvre du procédé de configuration est maintenant décrit en référence aux schémas des figures 2 et 3.

Le procédé va être principalement être décrit à l'aide du logigramme de la figure 3, le schéma de la figure 2 pouvant être utilisé pour préciser certaines précisions de fonctionnement dans certains modes de réalisation.

Initialement, une pluralité d'appareils électriques en attente de configuration sont présents dans le tableau électrique 4.

Les données de configuration lisibles par machine comportant la liste des appareils électriques à installer est fournie par un utilisateur. Par exemple, cette liste peut être envoyés à l'appareil de contrôle 18.

Par exemple, à ce stade, les appareils électriques sont reçus dans des tiroirs amovibles 8 qui sont en position connectée (insérés) dans les logements correspondants des armoires électriques 6.

Dans ce qui suit, pour simplifier, on pourra considérer que chaque appareil électrique est reçu dans un tiroir distinct.

Toutefois, en pratique, plusieurs appareils électriques pourraient être reçus dans un même tiroir amovible 8 (et ainsi plusieurs appareils électriques pourraient être associés au même contrôleur électronique 26 et à la même interface utilisateur 28).

Le procédé est démarré lors d'une étape S200.

Ensuite, en réponse, lors d'une étape S202, les appareils électriques passent dans un mode de configuration. Chaque appareil électrique affiche alors un identifiant visuel sur un écran d'affichage électronique de l'interface utilisateur 28 correspondante, l'identifiant visuel affiché comportant des informations d'identification dudit appareil.

Avantageusement, pour chaque appareil électrique devant être configuré, un indicateur lumineux est activé. Cet indicateur lumineux restant allumé tant que l'appareil électrique n'a pas été configuré avec succès.

Cet indicateur lumineux peut être une diode électroluminescente de l'interface utilisateur 28 qui s'allume en émettant de la lumière avec une couleur spécifique (par exemple, blanc).

Lors d'une étape S204, l'utilisateur acquiert, avec le terminal 30, une image montrant les appareils électriques présents dans le tableau électrique, ladite image acquise comportant les identifiants visuels de chacun desdits appareils électriques.

L'acquisition d'images peut consister à acquérir une seule image, telle qu'une photographie numérique, ou une pluralité d'images, par exemple un flux vidéo.

On comprend ici que les informations d'identification des identifiants visuels de l'image acquise (ou des images acquises) sont automatiquement extraites à partir des identifiants visuels affichés sur l'image acquise (ou sur les images acquises).

Cette extraction peut être réalisée au moyen d'un programme d'analyse d'images, par exemple grâce à des moyens logiciels tels ceux utilisés dans des systèmes de reconnaissance d'image pour la réalité augmentée.

Cette extraction automatique peut être réalisée par l'appareil de contrôle 18, totalement ou au moins en partie, voire par le terminal 30, éventuellement avec le concours d'un service logiciel annexe, ce service logiciel annexe pouvant être par exemple hébergé sur un serveur informatique distant.

Ensuite, les informations d'identification de chaque appareil électrique de ladite liste sont comparées automatiquement avec les informations d'identification des identifiants visuels de l'image acquise (ou des images acquises), par exemple lors d'une séquence d'étapes répétées en boucle.

Lors d'une étape S206, un appareil électrique de la liste est sélectionné.

Lors d'une étape S208, on recherche si les informations d'identification de l'appareil électrique de la liste sélectionné (« appareil cible ») correspondent à des informations d'identification extraites de l'image acquise.

Si aucune correspondance n'est trouvée, le procédé identifie alors une condition d'anomalie, par exemple lors d'une étape S210.

Par exemple, une alerte est envoyée et/ou affichée à destination d'un utilisateur, notamment en affichant un message d'anomalie sur une interface utilisateur associée audit appareil électrique.

Le message d'anomalie peut être affiché en activant un témoin lumineux sur l'interface utilisateur associée audit appareil électrique. Par exemple, le témoin lumineux peut être de couleur rouge.

Si au contraire une telle correspondance est trouvée, alors, lors d'une étape S212, l'appareil correspondant est dit être identifié, et les paramètres de configuration sont envoyés à cet appareil par l'unité de contrôle 18, par exemple au moyen du réseau informatique local et de l'équipement de routage 14.

En réponse à l'étape S212, pour chaque appareil électrique de la liste dont les informations d'identification correspondent aux informations d'identification d'un des identifiants visuels de l'image acquise, ledit au moins un paramètre de réglage envoyé est appliqué par un contrôleur électronique associé audit appareil électrique.

Lors d'une étape S214, le procédé vérifie si le ou les paramètres envoyés à cet appareil électrique ont bien été appliqués.

Si le ou les paramètres envoyés à cet appareil électrique n'ont pas été reçus ou n'ont pas pu être appliqués, alors le procédé identifie une condition d'anomalie, par exemple lors d'une étape S216 identique ou similaire à l'étape S210.

Si au contraire le ou les paramètres envoyés à cet appareil électrique ont bien été appliqués, alors, lors d'une étape S218, l'appareil correspondant est dit être configuré.

Par exemple, un indicateur lumineux associé à l'appareil électrique change d'état. Notamment, l'indicateur lumineux peut changer de couleur, par exemple prendre la couleur verte..

Le cas échéant, l'indicateur lumineux précédemment activé suite à l'étape S202 est alors désactivé.

Lors d'une étape S220, le procédé vérifie s'il reste, dans la liste acquise, au moins appareil électrique à configurer. Le cas échéant, comme illustré par l'étape S202, le procédé répète les étapes S206 et suivantes comme décrit ci-dessus.

L'étape S220 est répétée jusqu'à ce qu'il ne reste plus d'appareils électriques à traiter dans la liste.

Le procédé prend alors fin lors d'une étape S224.

Par exemple, un rapport peut être généré et/ou envoyé à l'utilisateur, pour l'informer des éventuels appareils qui n'ont pas pu être configurés.

Alternativement, la comparaison pourrait être réalisée en parcourant la liste des appareils électriques détectés sur l'image acquise à partir des identifiants visuels affichés, et en comparant cette liste à la liste d'appareils électriques à configurer acquise dans les données de configuration.

Sur l'exemple illustratif de la figure 2, le procédé débute à l'étape S100 par exemple à la requête d'un utilisateur, qui scanne alors le tableau électrique 4 avec le terminal 30 afin d'acquérir au moins une image du tableau électrique.

La liste des appareils électriques identifiés sur l'image acquise peut être affichée à l'utilisateur lors d'une étape S102.

Le procédé compare les informations d'identification de la liste avec celles acquises lors des étapes S103 et S104 et retourne le résultat lors d'une étape S105.

Puis, pour chaque appareil électrique détecté, le procédé extrait les informations (étapes S106, S107 et S109) puis détermine la position attendue de l'appareil (étape S110) et recherche un appareil correspondant dans la liste acquise (étape S111).

Pour chaque appareil identifié, les paramètres sont envoyés lors d'une étape S112, sont appliquées lors d'une étape S113 et une confirmation est envoyée lors d'une étape S115 par le contrôleur électronique 26 correspondant vers l'appareil de contrôle 18. Puis une confirmation est envoyée par l'appareil de contrôle 18 vers le terminal 30 lors d'une étape S116.

En cas d'échec à identifier un appareil électrique, un message d'erreur est envoyé par l'appareil de contrôle 18 vers le terminal 30 lors d'une étape S117.

En cas d'échec à configurer un appareil électrique identifié, un message d'erreur est envoyé vers le terminal 30 lors d'une étape S118.

Le procédé passe alors à l'appareil identifié suivant lors d'une étape S120.

De nombreux autres modes de réalisation sont possibles.

Par exemple, de façon optionnelle mais néanmoins avantageuse, une étape de vérification manuelle est mise en œuvre lorsqu'une condition d'anomalie est identifiée et persiste pour au moins un appareil électrique.

Cette étape de vérification manuelle peut être mise en œuvre lors de ou postérieurement à l'étape S224 et peut être répétée pour chaque appareil électrique n'ayant pas pu être configuré.

L'étape de vérification manuelle peut comporter, pour ledit appareil électrique :
- envoyer à un utilisateur une requête demandant d'actionner manuellement un élément d'interface d'une interface utilisateur associée audit appareil électrique ;
- acquérir une information provenant d'un appareil du tableau indiquant qu'un utilisateur a interagi avec ledit élément d'interface,
- si l'appareil ayant envoyé ladite information correspond à l'appareil pour lequel la condition d'anomalie a été soulevée, lever la condition d'anomalie et considérer ledit appareil électrique comme ayant été identifié avec succès.

Par exemple, il peut être demandé à l'utilisateur d'appuyer sur un bouton de l'interface utilisateur.

L'appareil cible peut alors être identifié par un indicateur spécifique, tel qu'un témoin lumineux prenant un état spécifique, tel qu'un clignotement et/ou un changement de couleur, ou une couleur spécifique, afin de guider l'utilisateur vers cet appareil électrique et de distinguer cet appareil de la pluralité des autres appareils électriques du tableau électrique 4.

Les modes de réalisation et les variantes envisagés ci-dessus peuvent être combinés entre eux pour créer de nouveaux modes de réalisation.

## Revendications

1. Procédé pour configurer des appareils électriques dans un tableau électrique (4), ce procédé comportant des étapes consistant à :
- acquérir (S200) des données de configuration lisibles par machine comportant une liste d'appareils électriques à installer, la liste comportant, pour chaque appareil électrique à installer, des données d'identification de l'appareil électrique et au moins un paramètre de réglage à appliquer ;
- par chaque appareil électrique présent dans le tableau électrique, afficher (S202) un identifiant visuel sur un écran d'affichage électronique (28) associé à l'appareil électrique, l'identifiant visuel affiché comportant des informations d'identification dudit appareil ;
- par un terminal utilisateur (30) comportant un capteur optique, acquérir (S204) une image montrant les appareils électriques présents dans le tableau électrique (4), ladite image acquise comportant les identifiants visuels affichés par chacun desdits appareils électriques ;
- par un processeur (18) :
comparer automatiquement (S206, S208) les informations d'identification de chaque appareil électrique de ladite liste avec les informations d'identification des identifiants visuels de l'image acquise ;
pour chaque appareil électrique de la liste dont les informations d'identification correspondent aux informations d'identification d'un des identifiants visuels de l'image acquise, envoyer (S212) ledit au moins un paramètre de réglage à appliquer audit appareil électrique ;
pour chaque appareil électrique de la liste dont les informations d'identification ne correspondent pas aux informations d'identification d'un des identifiants visuels de l'image acquise, identifier une condition d'anomalie (S210).

2. Procédé selon la revendication 1, dans lequel, une étape de vérification manuelle est mise en oeuvre lorsqu'une condition d'anomalie est identifiée (S210, S216) pour au moins un appareil électrique.

3. Procédé selon la revendication précédente, dans lequel l'étape de vérification manuelle comporte, pour ledit appareil électrique :
- envoyer à un utilisateur une requête demandant d'actionner manuellement un élément d'interface d'une interface utilisateur associée audit appareil électrique ;
- acquérir une information provenant d'un appareil du tableau indiquant qu'un utilisateur a interagi avec ledit élément d'interface,
- si l'appareil ayant envoyé ladite information correspond à l'appareil pour lequel la condition d'anomalie a été soulevée, lever la condition d'anomalie et considérer ledit appareil électrique comme ayant été identifié avec succès.

4. Procédé selon l'une quelconque des revendications précédentes, dans lequel après avoir identifié une condition d'anomalie pour un appareil électrique, le procédé affiche (S210, S216) un message d'anomalie sur une interface utilisateur (28) associée audit appareil électrique.

5. Procédé selon la revendication précédente, dans lequel le message d'anomalie est affiché (S210, S216) en activant un témoin lumineux sur l'interface utilisateur (28) associée audit appareil électrique.

6. Procédé selon l'une quelconque des revendications précédentes, dans lequel l'identifiant visuel est un code à deux dimensions lisible optiquement, tel qu'un code « Data Matrix », ou un QR-code, ou un code à barres, ou tout code équivalent.

7. Procédé selon l'une quelconque des revendications précédentes, dans lequel le terminal utilisateur (30) est un appareil de communication mobile, tel qu'un téléphone mobile, ou une tablette numérique, ou un assistant personnel portable, ou un ordinateur portable, ou tout dispositif électronique équivalent.

8. Procédé selon l'une quelconque des revendications précédentes, dans lequel, pour chaque appareil électrique de la liste dont les informations d'identification correspondent aux informations d'identification d'un des identifiants visuels de l'image acquise, ledit au moins un paramètre de réglage envoyé est appliqué par un contrôleur électronique (26) associé audit appareil électrique.

9. Procédé selon l'une quelconque des revendications précédentes, dans lequel chaque appareil électrique est associé à un indicateur lumineux, ledit indicateur lumineux restant allumé (S202) tant que l'appareil électrique n'a pas été configuré avec succès.

10. Système (2) pour configurer des appareils électriques dans un tableau électrique (4), ce système comportant un tableau électrique (4), un terminal utilisateur (30) et des appareils électriques installés dans le tableau électrique (4), le système étant configuré pour mettre en oeuvre des étapes consistant à :
- acquérir (S200) des données de configuration lisibles par machine comportant une liste d'appareils électriques à installer, la liste comportant, pour chaque appareil électrique à installer, des données d'identification de l'appareil électrique et au moins un paramètre de réglage à appliquer ;
- par chaque appareil électrique présent dans le tableau électrique, afficher (S202) un identifiant visuel sur un écran d'affichage électronique (28) associé à l'appareil électrique, l'identifiant visuel affiché comportant des informations d'identification dudit appareil ;
- par le terminal utilisateur (30) comportant un capteur optique, acquérir (S204) une image montrant les appareils électriques présents dans le tableau électrique (4), ladite image acquise comportant les identifiants visuels affichés par chacun desdits appareils électriques ;
- par un processeur (18) :
comparer automatiquement (S206, S208) les informations d'identification de chaque appareil électrique de ladite liste avec les informations d'identification des identifiants visuels de l'image acquise ;
pour chaque appareil électrique de la liste dont les informations d'identification correspondent aux informations d'identification d'un des identifiants visuels de l'image acquise, envoyer (S212) ledit au moins un paramètre de réglage à appliquer audit appareil électrique ;
pour chaque appareil électrique de la liste dont les informations d'identification ne correspondent pas aux informations d'identification d'un des identifiants visuels de l'image acquise, identifier une condition d'anomalie (S210).

## Patentansprüche

1. Verfahren zum Konfigurieren von elektrischen Geräten in einer elektrischen Schalttafel (4), das Verfahren umfassend Schritte, die aus Folgendem bestehen:
- Erfassen (S200) maschinenlesbarer Konfigurationsdaten, umfassend eine Liste von zu installierenden elektrischen Geräten, die Liste umfassend, für jedes zu installierende elektrische Gerät, die Identifizierungsdaten des elektrischen Geräts und mindestens einen anzuwendenden Einstellungsparameter;
- durch jedes elektrische Gerät, das in der Schalttafel vorhanden ist, Anzeigen (S202) einer visuellen Kennung auf einem elektronischen Anzeigeschirm (28), der mit dem elektrischen Gerät assoziiert ist, wobei die angezeigte visuelle Kennung Identifizierungsinformationen des Geräts umfasst;
- durch ein Benutzerendgerät (30), umfassend einen optischen Sensor, Erfassen (S204) eines Bilds, das die in der Schalttafel (4) vorhandenen elektrischen Geräte darstellt, das erfasste Bild umfassend die visuellen Kennungen, die von jedem der elektrischen Geräte angezeigt werden;
- durch einen Prozessor (18):
automatisches Vergleichen (S206, S208) der Identifizierungsinformationen von jedem elektrischen Gerät in der Liste mit den Identifizierungsinformationen der visuellen Identifikatoren des erfassten Bilds;
für jedes elektrische Gerät in der Liste, dessen Identifizierungsinformationen mit den Identifizierungsinformationen eines der visuellen Identifikatoren des erfassten Bildes übereinstimmen, Senden (S212) des mindestens einen Einstellparameters, der auf das elektrische Gerät angewendet werden soll;
für jedes elektrische Gerät in der Liste, dessen Identifizierungsinformationen nicht mit den Identifizierungsinformationen einer der visuellen Kennungen des erfassten Bildes übereinstimmen, Identifizieren einer Anomaliebedingung (S210).

2. Verfahren nach Anspruch 1, wobei ein manueller Prüfschritt durchgeführt wird, wenn eine Anomaliebedingung für mindestens ein elektrisches Gerät identifiziert wird (S210, S216).

3. Verfahren nach dem vorherigen Anspruch, wobei der manuelle Prüfschritt für das elektrische Gerät Folgendes umfasst:
- Senden einer Anforderung an einen Benutzer, die auffordert, ein Schnittstellenelement einer Benutzerschnittstelle, die mit dem genannten elektrischen Gerät assoziiert ist, manuell zu betätigen;
- Erfassen von Informationen, die von einem Gerät auf der Tafel stammen, die angeben, dass ein Benutzer mit dem Schnittstellenelement interagiert hat,
- wenn das Gerät, das die Informationen gesendet hat, die mit dem Gerät übereinstimmen, für das die Anomaliebedingung erhoben wurde, Aufheben der Anomaliebedingung und Betrachten des elektrischen Geräts als erfolgreich identifiziert.

4. Verfahren nach einem der vorherigen Ansprüche, wobei das Verfahren nach Identifizieren einer Anomaliebedingung für ein elektrisches Gerät eine Anomalienachricht auf einer Benutzerschnittstelle (28), die mit dem elektrischen Gerät assoziiert ist, anzeigt (S210, S216).

5. Verfahren nach dem vorherigen Anspruch, bei dem die Anomalienachricht durch Aktivieren einer Kontrollleuchte auf der Benutzerschnittstelle (28), die mit dem elektrischen Gerät assoziiert ist, angezeigt wird (S210, S216).

6. Verfahren nach einem der vorherigen Ansprüche, wobei die visuelle Kennung ein optisch lesbarer zweidimensionaler Code ist, wie beispielsweise ein Code "Data Matrix", oder ein QR-Code, oder ein Strichcode, oder ein äquivalenter Code.

7. Verfahren nach einem der vorherigen Ansprüche, wobei das Benutzerendgerät (30) ein mobiles Kommunikationsgerät ist, wie beispielsweise ein Mobiltelefon oder ein digitaler Tablet-PC oder ein tragbarer persönlicher Assistent oder ein tragbarer Computer oder ein äquivalentes elektronisches Gerät.

8. Verfahren nach einem der vorherigen Ansprüche, wobei für jedes elektrische Gerät auf der Liste, dessen Identifizierungsinformationen mit den Identifizierungsinformationen einer der visuellen Kennungen des erfassten Bildes übereinstimmen, der mindestens eine gesendete Einstellparameter von einer elektronischen Steuerung (26) angewendet wird, die mit dem elektrischen Gerät assoziiert ist.

9. Verfahren nach einem der vorherigen Ansprüche, wobei jedes elektrische Gerät mit einer Leuchtanzeige assoziiert ist, wobei die genannte Leuchtanzeige eingeschaltet bleibt (S202), solange das elektrische Gerät nicht erfolgreich konfiguriert wurde.

10. System (2) zum Konfigurieren von elektrischen Geräten in einer elektrischen Schalttafel (4), das System umfassend eine elektrische Schalttafel (4), ein Benutzerendgerät (30) und elektrische Geräte, die in der elektrischen Schalttafel (4) installiert sind, wobei das System konfiguriert ist, um Schritte durchzuführen, die aus Folgendem bestehen:
- Erfassen (S200) maschinenlesbarer Konfigurationsdaten, umfassend eine Liste von zu installierenden elektrischen Geräten, die Liste umfassend, für jedes zu installierende elektrische Gerät, die Identifizierungsdaten des elektrischen Geräts und mindestens einen anzuwendenden Einstellungsparameter;
- durch jedes elektrische Gerät, das in der Schalttafel vorhanden ist, Anzeigen (202) einer visuellen Kennung auf einem elektronischen Anzeigeschirm (28), der mit dem elektrischen Gerät assoziiert ist, wobei die angezeigte visuelle Kennung Identifizierungsinformationen des Geräts umfasst;
- durch das Benutzerendgerät (30), umfassend einen optischen Sensor, Erfassen (S204) eines Bilds, das die in der Schalttafel (4) vorhandenen elektrischen Geräte darstellt, das erfasste Bild umfassend die visuellen Kennungen, die von jedem der elektrischen Geräte angezeigt werden;
- durch einen Prozessor (18):
automatisches Vergleichen (S206, S208) der Identifizierungsinformationen von jedem elektrischen Gerät in der Liste mit den Identifizierungsinformationen der visuellen Identifikatoren des erfassten Bilds;
für jedes elektrische Gerät in der Liste, dessen Identifizierungsinformationen mit den Identifizierungsinformationen eines der visuellen Identifikatoren des erfassten Bildes übereinstimmen, Senden (S212) des mindestens einen Einstellparameters, der auf das elektrische Gerät angewendet werden soll;
für jedes elektrische Gerät in der Liste, dessen Identifizierungsinformationen nicht mit den Identifizierungsinformationen einer der visuellen Kennungen des erfassten Bildes übereinstimmen, Identifizieren einer Anomaliebedingung (S210).

## Claims

1. A method for configuring electrical devices in an electrical panel (4), the method comprising steps consisting of:
- acquiring (S200) machine-readable configuration data comprising a list of electrical devices to be installed, the list comprising, for each electrical device to be installed, identification data of the electrical device, and at least one setting parameter to be applied;
- by each electrical device present in the electrical panel, displaying (S202) a visual identifier on an electronic display screen (28) associated with the electrical device, the displayed visual identifier comprising information identifying said device;
- by a user terminal (30), comprising an optical sensor, acquiring (S204) an image showing the electrical devices present in the electrical panel (4), said acquired image comprising the visual identifiers displayed by each of said electrical devices;
- by a processor (18):
automatically comparing (S206, S208) the identification information of each electrical device in said list with the identification information of the visual identifiers of the acquired image ;
for each electrical device on the list whose identification information matches the identification information of one of the visual identifiers of the acquired image, sending (S212) said at least one setting parameter to be applied to said electrical device;
for each electrical device on the list whose identification information does not match the identification information of one of the visual identifiers in the acquired image, identifying an anomaly condition (S210).

2. The method according to claim 1, wherein a manual verification step is implemented when an anomaly condition is identified (S210, S216) for at least one electrical device.

3. The method according to the preceding claim, wherein the manual verification step comprises, for said electrical device:
- sending a request to a user to manually operate an interface element of a user interface associated with said electrical device;
- acquiring information from a device of the panel indicating that a user has interacted with said interface element,
- if the device that sent said information matches the device for which the anomaly condition was raised, voiding the anomaly condition and considering the said electrical device as having been successfully identified.

4. The method according to any one of the preceding claims, wherein after identifying an anomaly condition for an electrical device, the method displays (S210, S216) an anomaly message on a user interface (28) associated with said electrical device.

5. The method according to the preceding claim, wherein the anomaly message is displayed (S210, S216) by activating an indicator light on the user interface (28) associated with said electrical device.

6. The method according to any one of the preceding claims, wherein the visual identifier is an optically readable two-dimensional code, such as a data matrix code, or a QR code, or a bar code, or any equivalent code.

7. The method according to any one of the preceding claims, wherein the user terminal (30) is a mobile communication device, such as a mobile phone, or a digital tablet, or a portable personal assistant, or a laptop computer, or any equivalent electronic device.

8. The method according to any one of the preceding claims, wherein, for each electrical device on the list whose identification information matches the identification information of one of the visual identifiers of the acquired image, said at least one sent setting parameter is applied by an electronic controller (26) associated with said electrical device.

9. The method according to any one of the preceding claims, wherein each electrical device is associated with an indicator light, said indicator light remaining on (S202) until the electrical device has been successfully configured.

10. A system (2) for configuring electrical devices in an electrical panel (4), the system comprising an electrical panel (4), a user terminal (30) and electrical devices installed in the electrical panel (4), the system being configured to perform the steps consisting of:
- acquiring (S200) machine-readable configuration data comprising a list of electrical devices to be installed, the list comprising, for each electrical device to be installed, identification data of the electrical device, and at least one setting parameter to be applied;
- by each electrical device present in the electrical panel, displaying (S202) a visual identifier on an electronic display screen (28) associated with the electrical device, the displayed visual identifier comprising information identifying said device;
- by the user terminal (30), comprising an optical sensor, acquiring (S204) an image showing the electrical devices present in the electrical panel (4), said acquired image comprising the visual identifiers displayed by each of said electrical devices;
- by a processor (18):
automatically comparing (S206, S208) the identification information of each electrical device in said list with the identification information of the visual identifiers of the acquired image;
for each electrical device on the list whose identification information matches the identification information of one of the visual identifiers of the acquired image, sending (S212) said at least one setting parameter to be applied to said electrical device;
for each electrical device on the list whose identification information does not match the identification information of one of the visual identifiers in the acquired image, identifying an anomaly condition (S210).
